# EUROPEAN PATENT APPLICATION

(11) **EP 4 804 414 A1**
(43) Date of publication of application: **09.09.2026**
(21) Application number: 24901100.8
(22) Date of filing: 05.12.2024
(51) Int. Cl.: H04B 1/40, H04B 1/04, H04B 1/18, H03M 1/12

(54) **ANTENNA SWITCHING CIRCUIT INCLUDING REGISTER AND ELECTRONIC DEVICE FOR CONTROLLING ANTENNA SWITCHING CIRCUIT**

(30) Priority: 08.12.2023 KR 20230177853; 04.01.2024 KR 20240001698
(71) Applicant: Samsung Electronics Co., Ltd., Suwon-si, Gyeonggi-do 16677 (KR)
(72) Inventor: BYUN, Youngseon, Suwon-si, Gyeonggi-do 16677 (KR); SEONG, Kihyug, Suwon-si, Gyeonggi-do 16677 (KR); NA, Hyoseok, Suwon-si, Gyeonggi-do 16677 (KR); MOON, Yohan, Suwon-si, Gyeonggi-do 16677 (KR); YANG, Dongil, Suwon-si, Gyeonggi-do 16677 (KR)
(74) Representative: HGF
(86) International application number: PCT/KR2024/019859
(87) International publication number: WO 2025/121914

(57) **Abstract**

In an antenna switching circuit and an electronic device according to an embodiment, the antenna switching circuit may comprise at least one first port electrically connected to a matching circuit. The antenna switching circuit may comprise a second port electrically connected to one port of the at least one first port and an antenna. The antenna switching circuit may comprise a signal identification circuit for identifying a characteristic of a signal input through the second port. The antenna switching circuit may comprise a register for storing data corresponding to the characteristic of the signal input through the second port. The antenna switching circuit may comprise a controller for controlling a connection between the at least one first port and the second port. The controller may transmit the data stored in the register to a processor.

## Description

### [Technical Field]

Various embodiments of the disclosure relate to an electronic device and an operating method thereof, and relate to an antenna switching circuit including a register, and an electronic device controlling the antenna switching circuit.

### [Background Art]

Various electronic devices such as a smart phone, a tablet personal computer (PC), a portable multimedia player (PMP), a personal digital assistant (PDA), a laptop PC, or a wearable device are becoming widespread.

Recent electronic devices are capable of supporting various communication schemes. For example, the electronic device can support various communications including cellular communication, short-range wireless communication, communication for position measurement, and satellite communication. Some of various communication schemes can be performed through similar frequency bands. For example, the electronic device can perform cellular communication through a specific frequency band (e.g., 2.4 GHz), and can perform short-range wireless communication (e.g., Bluetooth or Wi-Fi) through a frequency band (e.g., 2.4 GHz) that at least partially overlaps with the specific frequency band. The electronic device can use the same antenna in order to perform communications that use frequency bands that at least partially overlap with each other. To improve communication performance, the electronic device may include an antenna switching circuit that electrically connects one of a plurality of matching circuits for impedance matching to an antenna. The electronic device can control the antenna switching circuit so as to electrically connect a matching circuit corresponding to a frequency band being used and an antenna.

The above information may be presented as related art only to assist with an understanding of the disclosure. No determination has been made, and no assertion is made, as to whether any of the above might be applicable as prior art with regard to the disclosure.

### [Disclosure of Invention]

### [Technical Problem]

The antenna switching circuit of the electronic device may be implemented on a printed circuit board where the antenna is disposed (or implemented). The printed circuit board on which the antenna switching circuit and/or the antenna is disposed may be a printed circuit board different from a main printed circuit board on which various components, including a processor of the electronic device, are disposed. When the printed circuit board on which the antenna switching circuit and/or the antenna is disposed is electrically connected to the main printed circuit board, the electronic device can perform communication using the antenna and the antenna switching circuit.

However, the printed circuit board on which the antenna switching circuit and/or the antenna is disposed may not be electrically connected to the main printed circuit board due to various causes. For example, in the manufacturing process of the electronic device, the printed circuit board on which the antenna switching circuit and/or the antenna is disposed may not be electrically connected to the main printed circuit board. Furthermore, when the coupling is not appropriate between the printed circuit board on which the antenna switching circuit and/or the antenna is disposed and the main printed circuit board, or when the wiring is defective between the printed circuit board on which the antenna switching circuit and/or the antenna is disposed and the main printed circuit board, the printed circuit board on which the antenna switching circuit and/or the antenna is disposed may not be electrically connected to the main printed circuit board.

The electronic device can implement, on the main printed circuit board, a circuit for verifying whether the printed circuit board on which the antenna switching circuit and/or the antenna is disposed and the main printed circuit board are electrically connected, and can verify using the circuit whether the printed circuit board on which the antenna switching circuit and/or the antenna is disposed and the main printed circuit board are electrically connected. However, due to the presence of the circuit, the available mounting space on the main printed circuit board may be reduced. In addition, as some ports among a limited number of ports included in the processor are connected to the circuit, a situation may occur where other components cannot be connected through the ports.

The technical problems to be solved by the disclosure are not limited to those mentioned above, and other technical problems not mentioned will be clearly understood from the following description by a person skilled in the art to which the disclosure pertains.

### [Solution to Problem]

An antenna switching circuit according to an example may include at least one first port electrically connected to a matching circuit. The antenna switching circuit may include a second port electrically connected to one port among the at least one first port and an antenna. The antenna switching circuit may include a signal verification circuit configured to verify characteristics of a signal input through the second port. The antenna switching circuit may include a register configured to store data corresponding to the characteristics of the signal input through the second port. The antenna switching circuit may include a controller configured to control a connection between the at least one first port and the second port. The controller may be configured to transmit the data stored in the register to a processor.

An electronic device according to an example may include a first printed circuit board including a processor, a transceiver, and a front-end module. The electronic device may include a second printed circuit board including an antenna and an antenna switching circuit. The antenna switching circuit may include at least one first port electrically connected to a matching circuit. The antenna switching circuit may include a second port electrically connected to one port among the at least one first port and an antenna. The antenna switching circuit may include a signal verification circuit configured to verify characteristics of a signal input through the second port. The antenna switching circuit may include a register configured to store data corresponding to the characteristics of the signal input through the second port. The antenna switching circuit may include a controller configured to control a connection between the at least one first port and the second port. The processor may transmit a signal requesting the data stored in the register to the controller. The processor may receive the data stored in the register from the controller. The processor may be configured to verify, based on the data stored in the register, whether the first printed circuit board and the second printed circuit board are electrically connected.

An antenna switching circuit according to an example may include at least one first port electrically connected to a matching circuit. The antenna switching circuit may include a second port electrically connected to one port among the at least one first port and an antenna. The antenna switching circuit may include a third port configured to output a signal applied to the antenna switching circuit. The antenna switching circuit may include a signal verification circuit configured to verify characteristics of the signal output through the third port. The antenna switching circuit may include a register configured to store data corresponding to the characteristics of the signal output through the third port. The antenna switching circuit may include a controller configured to control a connection between the at least one first port and the second port. The controller may be configured to transmit the data stored in the register to a processor.

An electronic device according to an example may include a first printed circuit board including a processor, a transceiver, and a front-end module. The electronic device may include a second printed circuit board including an antenna and an antenna switching circuit. The antenna switching circuit may include at least one first port electrically connected to a matching circuit. The antenna switching circuit may include a second port electrically connected to one port among the at least one first port and the antenna. The antenna switching circuit may include a third port configured to output a signal applied to the antenna switching circuit. The antenna switching circuit may include a signal verification circuit configured to verify characteristics of the signal output through the third port. The antenna switching circuit may include a register configured to store data corresponding to the characteristics of the signal output through the third port. The antenna switching circuit may include a controller configured to control a connection between the at least one first port and the second port. The processor may transmit a signal requesting the data stored in the register to the controller. The processor may receive the data stored in the register from the controller. The processor may be configured to verify, based on the data stored in the register, whether the first printed circuit board and the second printed circuit board are electrically connected.

### [Advantageous Effects of invention]

An antenna switching circuit according to an embodiment may include a component capable of verifying whether a first printed circuit board and a second printed circuit board, on which an antenna is disposed, are electrically connected, and a register capable of storing characteristics of a signal verified using the component. The characteristics of the signal may vary depending on whether the first printed circuit board and the second printed circuit board are electrically connected. The electronic device may verify, based on the characteristics of the signal stored in the antenna switching circuit, whether the first printed circuit board and the second printed circuit board are electrically connected. Accordingly, the electronic device can save mounting space that would otherwise be required by a circuit for verifying the electrical connection between the first printed circuit board and the second printed circuit board on the first printed circuit board, and can also save the port to which the circuit would be connected.

The effects obtainable from the disclosure are not limited to those mentioned above, and other effects not mentioned herein will be clearly understood from the following description by a person skilled in the art to which the disclosure pertains.

### [Brief Description of Drawings]

FIG. 1 is a block diagram of an electronic device according to various embodiments of the disclosure.
FIG. 2 is a block diagram of an electronic device for supporting legacy network communication and 5G network communication according to various embodiments.
FIG. 3 is a diagram illustrating a circuit for verifying whether an antenna is coupled in an electronic device according to an example.
FIG. 4 is a diagram illustrating an antenna switching circuit in an electronic device according to an example.
FIG. 5 is a diagram illustrating an example of verifying whether an antenna is coupled using an antenna switching circuit in an electronic device according to an example.
FIG. 6 is a diagram illustrating an antenna switching circuit in an electronic device according to an example.
FIG. 7 is a diagram illustrating an example of verifying whether an antenna is coupled using an antenna switching circuit in an electronic device according to an example.

### [Mode for the Invention]

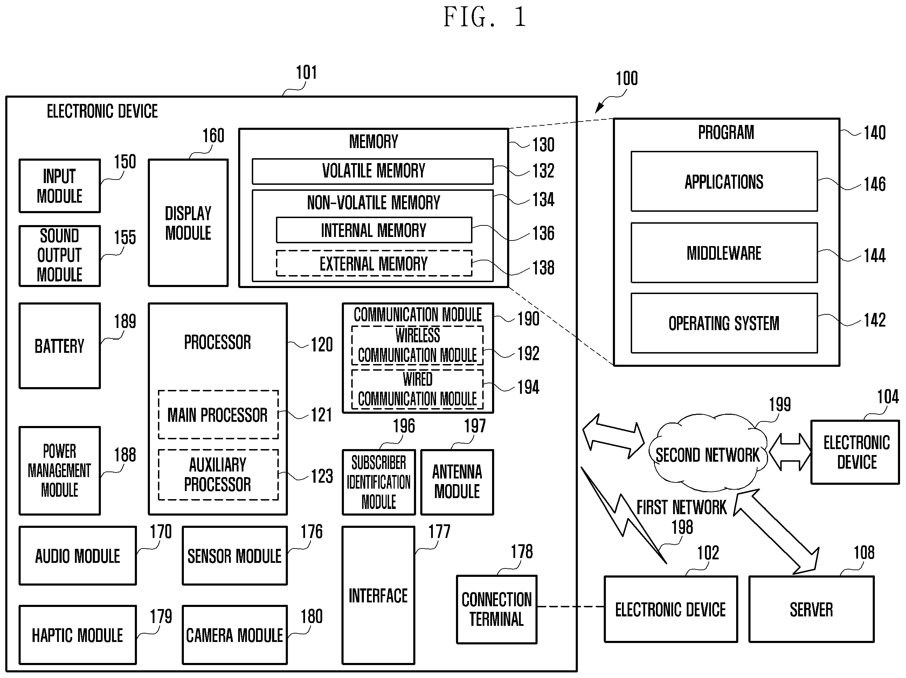

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra-low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

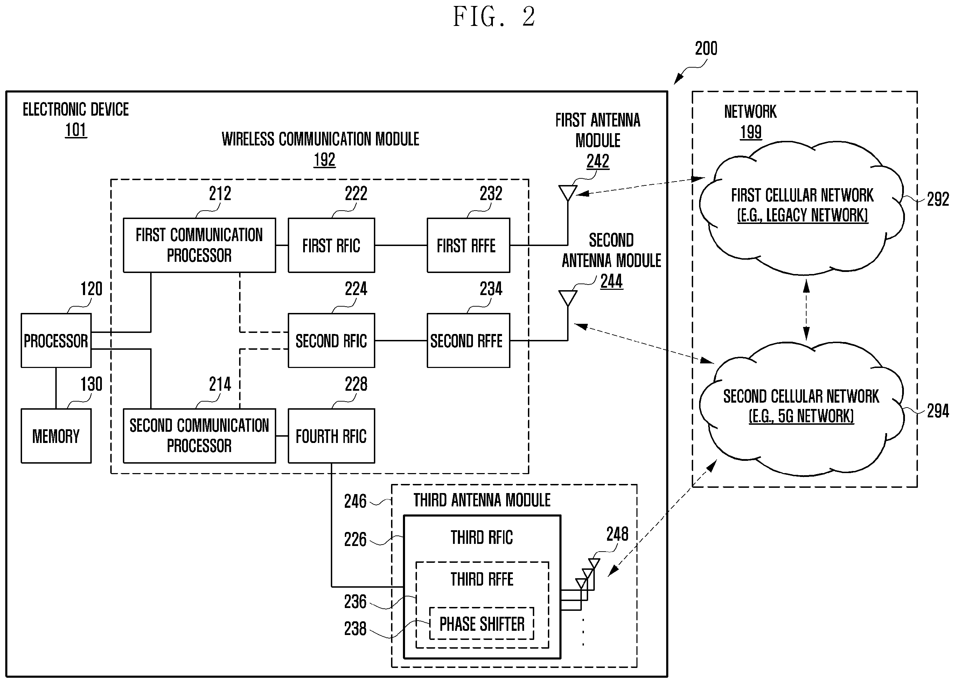

FIG. 2 is a block diagram 200 of an electronic device 101 for supporting legacy network communication and 5G network communication according to certain embodiments. Referring to FIG. 2, the electronic device 101 may include a first communication processor 212, a second communication processor 214, a first radio frequency integrated circuit (RFIC) 222, a second RFIC 224, a third RFIC 226, a fourth RFIC 228, a first radio frequency front end (RFFE) 232, a second RFFE 234, a first antenna module 242, a second antenna module 244, and an antenna 248. The electronic device 101 may further include the processor 120 and the memory 130. The network 199 may include a first network 292 and a second network 294. According to another embodiment, the electronic device 101 may further include at least one component among the components illustrated in FIG. 1, and the network 199 may further include at least one other network. According to an embodiment, the first communication processor 212, the second communication processor 214, the first RFIC 222, the second RFIC 224, the fourth RFIC 228, the first RFFE 232, and the second RFFE 234 may be included as at least a part of the wireless communication module 192. According to another embodiment, the fourth RFIC 228 may be omitted or may be included as a part of the third RFIC 226.

The first communication processor 212 may establish a communication channel of a band to be used for wireless communication with the first network 292, and may support legacy network communication via the established communication channel. According to certain embodiments, the first network may be a legacy network including 2G, 3G, 4G, or long term evolution (LTE) network. The second communication processor 214 may establish a communication channel corresponding to a designated band (e.g., approximately 6 GHz to 60 GHz) among bands to be used for wireless communication with the second network 294, and may support 5G network communication via the established channel. According to certain embodiments, the second network 294 may be a 5G network defined in 3GPP. Additionally, according to an embodiment, the first communication processor 212 or the second communication processor 214 may establish a communication channel corresponding to another designated band (e.g., lower than 6 GHz) among bands to be used for wireless communication with the second network 294, and may support 5G network communication via the established channel. According to an embodiment, the first communication processor 212 and the second communication processor 214 may be implemented in a single chip or a single package. According to certain embodiments, the first communication processor 212 or the second communication processor 214 may be implemented in a single chip or a single package, together with the processor 120, the sub-processor 123, or the communication module 190.

In the case of transmission, the first RFIC 222 may convert a baseband signal generated by the first communication processor 212 into a radio frequency (RF) signal in a range of approximately 700MHz to 3GHz used for the first network 292 (e.g., a legacy network). In the case of reception, an RF signal is obtained from the first network 292 (e.g., a legacy network) via an antenna (e.g., the first antenna module 242), and may be preprocessed via an RFFE (e.g., the first RFFE 232). The first RFIC 222 may convert the preprocessed RF signal to a baseband signal so that the base band signal is processed by the first communication processor 212.

In the case of transmission, the second RFIC 224 may convert a baseband signal generated by the first communication processor 212 or the second communication processor 214 into an RF signal (hereinafter, a 5G Sub6 RF signal) of a Sub6 band (e.g., lower than 6GHz) used for the second network 294 (e.g., 5G network). In the case of reception, a 5G Sub6 RF signal is obtained from the second network 294 (e.g., a 5G network) via an antenna (e.g., the second antenna module 244), and may preprocessed by an RFFE (e.g., the second RFFE 234). The second RFIC 224 may convert the preprocessed 5G Sub6 RF signal into a baseband signal so that the baseband signal is processed by a corresponding communication processor from among the first communication processor 212 or the second communication processor 214.

The third RFIC 226 may convert a baseband signal generated by the second communication processor 214 into an RF signal (hereinafter, a 5G Above6 RF signal) of a 5G Above6 band (e.g., approximately 6 GHz to 60 GHz) to be used for the second network 294 (e.g., 5G network). In the case of reception, a 5G Above6 RF signal is obtained from the second network 294 (e.g., a 5G network) via an antenna (e.g., the antenna 248), and may be preprocessed by the third RFFE 236. The third RFIC 226 may convert the preprocessed 5G Above6 RF signal to a baseband signal so that the base band signal is processed by the second communication processor 214. According to an embodiment, the third RFFE 236 may be implemented as a part of the third RFIC 226.

According to an embodiment, the electronic device 101 may include the fourth RFIC 228, separately from or as a part of the third RFIC 226. In this instance, the fourth RFIC 228 may convert a baseband signal generated by the second communication processor 214 into an RF signal (hereinafter, an IF signal) in an intermediate frequency band (e.g., approximately 9 GHz to 11 GHz), and may transfer the IF signal to the third RFIC 226. The third RFIC 226 may convert the IF signal to a 5G Above6 RF signal. In the case of reception, a 5G Above6 RF signal is received from the second network 294 (e.g., a 5G network) via an antenna (e.g., the antenna 248), and may be converted into an IF signal by the third RFFE 226. The fourth RFIC 228 may convert the IF signal to a baseband signal so that the base band signal is processed by the second communication processor 214.

According to an embodiment, the first RFIC 222 and the second RFIC 224 may be implemented as a single chip or at least a part of the single package. According to an embodiment, the first RFFE 232 and the second RFFE 234 may be implemented as a single chip or at least a part of the single package. According to an embodiment, at least one antenna module of the first antenna module 242 or the second antenna module 244 may be omitted, or may be combined with another antenna module so as to process RF signals in a plurality of bands.

According to an embodiment, the third RFIC 226 and the antenna 248 may be disposed in the same substrate, and may form the third antenna module 246. For example, the wireless communication module 192 or the processor 120 may be disposed in a first substrate (e.g., main PCB). In this instance, the third RFIC 226 is disposed in a part (e.g., a lower part) of the second substrate (e.g., a sub PCB) separate from the first substrate and the antenna 248 is disposed on another part (e.g., an upper part), so that the third antenna module 246 is formed. By disposing the third RFIC 226 and the antenna 248 in the same substrate, the length of a transmission line therebetween may be reduced. For example, this may reduce a loss (e.g., attenuation) of a signal in a high-frequency band (e.g., approximate 6 GHz to 60 GHz) used for 5G network communication, the loss being caused by a transmission line. Accordingly, the electronic device 101 may improve the quality or speed of communication with the second network 294 (e.g., 5G network).

According to an embodiment, the antenna 248 may be implemented as an antenna array including a plurality of antenna elements which may be used for beamforming. In this instance, the third RFIC 226 may be, for example, a part of the third RFFE 236, and may include a plurality of phase shifters 238 corresponding to a plurality of antenna elements. In the case of transmission, each of the plurality of phase shifters 238 may shift the phase of a 5G Above6RF signal to be transmitted to the outside of the electronic device 101 (e.g., a base station of a 5G network) via a corresponding antenna element. In the case of reception, each of the plurality of phase shifters 238 may shift the phase of the 5G Above6 RF signal received from the outside via a corresponding antenna element into the same or substantially the same phase. This may enable transmission or reception via beamforming between the electronic device 101 and the outside.

The second network 294 (e.g., 5G network) may operate independently (e.g., Stand-Along (SA)) from the first network 292 (e.g., a legacy network), or may operate by being connected thereto (e.g., Non-Stand Alone (NSA)). For example, in the 5G network, only an access network (e.g., 5G radio access network (RAN) or next generation RAN (NG RAN)) may exist, and a core network (e.g., next generation core (NGC)) may not exist. In this instance, the electronic device 101 may access an access network of the 5G network, and may access an external network (e.g., the Internet) under the control of the core network (e.g., an evolved packed core (EPC)) of the legacy network. Protocol information (e.g., LTE protocol information) for communication with the legacy network or protocol information (e.g., New Radio (NR) protocol information) for communication with the 5G network may be stored in the memory 230, and may be accessed by another component (e.g., the processor 120, the first communication processor 212, or the second communication processor 214).

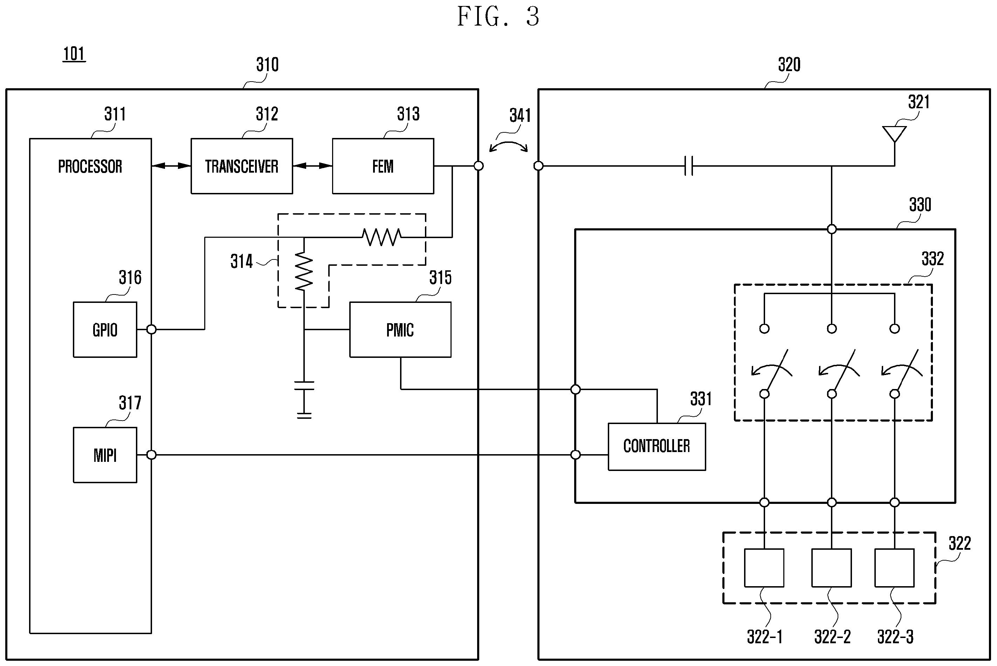

FIG. 3 is a diagram illustrating a circuit for verifying whether an antenna is coupled in an electronic device according to an example.

Referring to FIG. 3, the electronic device (e.g., the electronic device 101 in FIG. 1) may include a first printed circuit board 310 and/or a second printed circuit board 320.

The first printed circuit board 310 may be a printed circuit board on which various components of the electronic device 101 are disposed (or mounted, implemented). The first printed circuit board 310 may be referred to as a main board.

The first printed circuit board 310 may include a processor 311 (e.g., the processor 120 in FIG. 1 or the first communication processor 212 or the second communication processor 214 in FIG. 2), a transceiver 312 (e.g., the first RFIC 222, the second RFIC 224, or the fourth RFIC 228 in FIG. 2), and a front end module (FEM) 313 (e.g., the first RFFE 232 or the second RFFE 234 in FIG. 2). The term "include" may be replaced with "dispose" or "implement (or mount)".

The processor 311 may perform various operations for wireless communication on a cellular network. The processor 311 may support the establishment of a communication channel in a band to be used for wireless communication with the cellular network and support wireless communication through the established communication channel. Wireless communication on the cellular network may be referred to as cellular communication. The cellular communication may include at least one of 3^{rd} generation cellular communication, 4^{th} generation cellular communication, and/or 5^{th} generation cellular communication. The processor 311 may be referred to as a communication processor.

The transceiver 312 may perform various operations to process signals received from the processor 311. The transceiver 312 may perform a modulation operation on the signal received from the processor 311. For example, the transceiver 312 may perform a frequency modulation operation of converting a baseband signal received from the processor 311 into a frequency band (e.g., an RF band) to be used for cellular communication. Additionally, the transceiver 312 may perform a demodulation operation on a signal received from the outside. For example, the transceiver 312 may perform a frequency demodulation operation of converting a radio frequency (RF) signal into a baseband signal.

The FEM 313 may include components that process a signal (or a transmission signal, a Tx signal) transmitted by the transceiver 312 or a signal received from the outside. According to an example, the FEM 313 may include at least one of an amplifier for amplifying the signal transmitted by the transceiver, a low noise amplifier for amplifying the signal received from the outside, a filter for passing or removing a part of the frequency band of the signal, and a multiplexer (or duplexer) for separating the signal into a transmission signal or a reception signal.

The electronic device 101 may transmit a signal through the antenna 321 or receive an external signal through the antenna 321. The antenna 321 may be disposed (or implemented) on the second printed circuit board 320 which is electrically connected to the first printed circuit board 310.

The electronic device 101 may change a matching circuit electrically connected to the antenna 321 in order to transmit and/or receive signals of various frequency bands through the antenna 321. The electronic device 101 may include an antenna switching circuit 330 in order to change the connection of the matching circuit.

The antenna switching circuit 330 may electrically connect one of the matching circuits 322 (e.g., a first matching circuit 322-1, a second matching circuit 322-2, or a third matching circuit 322-3) to the antenna 321. The antenna switching circuit 330 may select one of the matching circuits 322 (e.g., the first matching circuit 322-1, the second matching circuit 322-2, or the third matching circuit 322-3) in accordance with the frequency band of the signal received or transmitted through the antenna 321. The antenna switching circuit 330 may include an antenna tuner.

The antenna switching circuit 330 may include a controller 331 for controlling the operation of the antenna switching circuit 330. The controller 331 is a component (or entity) that controls the operation of the antenna switching circuit 330, and may operate under the control of the processor 311.

The antenna switching circuit 330 may electrically connect one of the matching circuits 322 (e.g., the first matching circuit 322-1, the second matching circuit 322-2, or the third matching circuit 322-3) to the antenna 321 based on a control signal transmitted by the processor 311. The control signal transmitted by the processor 311 is a signal including information indicating the matching circuit to be connected to the antenna 321 and may include an antenna code. The control signal may be transmitted through a port (e.g., mobile industry processor interface (MIPI)) implemented in the processor 311.

The antenna switching circuit 330 may operate using power transmitted by a power management integrated circuit (PMIC) 315 disposed (or mounted, implemented) on the first printed circuit board 310. The PMIC 315 is electrically connected to the controller 331 and may supply power required for the operation of the antenna switching circuit 330 to the antenna switching circuit 330. The antenna switching circuit 330 may be disposed or mounted (implemented) on the second printed circuit board 320.

Referring to FIG. 3, the antenna 321 may be disposed on the second printed circuit board 320, which is a different from the first printed circuit board 310 on which various components of the electronic device 310 are disposed (or mounted, implemented). For smooth operation of cellular communication, the first printed circuit board 310 and the second printed circuit board 320 must be electrically connected (341).

The first printed circuit board 310 may include a circuit 314 for verifying whether the first printed circuit board 310 and the second printed circuit board 320 are electrically connected. The circuit 314 may include at least one or more elements (e.g., passive elements including at least one of a resistor, an inductor, and a capacitor or active elements) capable of sensing signals having different characteristics depending on whether the first printed circuit board 310 and the second printed circuit board 320 are electrically connected. The circuit 314 may be electrically connected to the processor 311 through a port (e.g., a general-purpose input/output (GPIO) port) of the processor 311.

The magnitude (or voltage) of the signal measured by the circuit 314 may vary depending on whether the first printed circuit board 310 and the second printed circuit board 320 are electrically connected. The PMIC 315 may apply (or supply) a signal capable of verifying whether the first printed circuit board 310 and the second printed circuit board 320 are electrically connected, to the circuit 314. The signal capable of verifying whether the first printed circuit board 310 and the second printed circuit board 320 are electrically connected may be transmitted to the processor 311 through the circuit 314 and the GPIO port 316. The processor 311 may receive the signal capable of verifying whether the first printed circuit board 310 and the second printed circuit board 320 are electrically connected, through the GPIO port 316, and verify the magnitude (or voltage) of the signal. The processor 311 may verify whether the first printed circuit board 310 and the second printed circuit board 320 are electrically connected, based on the magnitude (or voltage) of the signal.

According to an example, when the first printed circuit board 310 and the second printed circuit board 320 are electrically connected (341), the magnitude of the signal capable of verifying whether the first printed circuit board 310 and the second printed circuit board 320 are electrically connected may be distributed (or determined) based on the resistance value of the resistor included in the circuit 314.

According to an example, when the first printed circuit board 310 and the second printed circuit board 320 are electrically connected, the magnitude of the signal capable of verifying whether the first printed circuit board 310 and the second printed circuit board 320 are electrically connected may be distributed (or determined) based on the resistance value of the resistor included in the circuit 314.

According to an example, when the first printed circuit board 310 and the second printed circuit board 320 are not electrically connected, a port capable of electrically connecting the first printed circuit board 310 and the second printed circuit board 320 may be in an open state. The magnitude of the signal capable of verifying whether the first printed circuit board 310 and the second printed circuit board 320 are electrically connected may be substantially identical (or similar) to the magnitude of the signal supplied (or applied) by the PMIC 315. The magnitude of the signal capable of verifying whether the first printed circuit board 310 and the second printed circuit board 320 are electrically connected may be greater than the magnitude of the signal corresponding to the case where the first printed circuit board 310 and the second printed circuit board 320 are electrically connected.

The processor 311 may receive the signal from the circuit 314 through the GPIO port 316 and, based on the magnitude (or voltage) of the signal, verify whether the first printed circuit board 310 and the second printed circuit board 320 are electrically connected.

However, as the circuit 314 is disposed on the first printed circuit board 310, the available mounting space on the first printed circuit board 310 may be reduced. In addition, the presence of the circuit 314 and the wiring for the connection between the circuit 314 and the processor 311 may increase the difficulty of placing other components. Furthermore, as the number of GPIO ports 316 implemented in the processor 311 is gradually decreasing, the electrical connection of the circuit 314 to the processor 311 via the GPIO port 316 may result in a situation where other components intended to be connected to the processor 311 cannot be accommodated through the GPIO port 316.

Below, an example of an antenna switching circuit capable of verifying whether the first printed circuit board 311 and the second printed circuit board 312 are electrically connected is described.

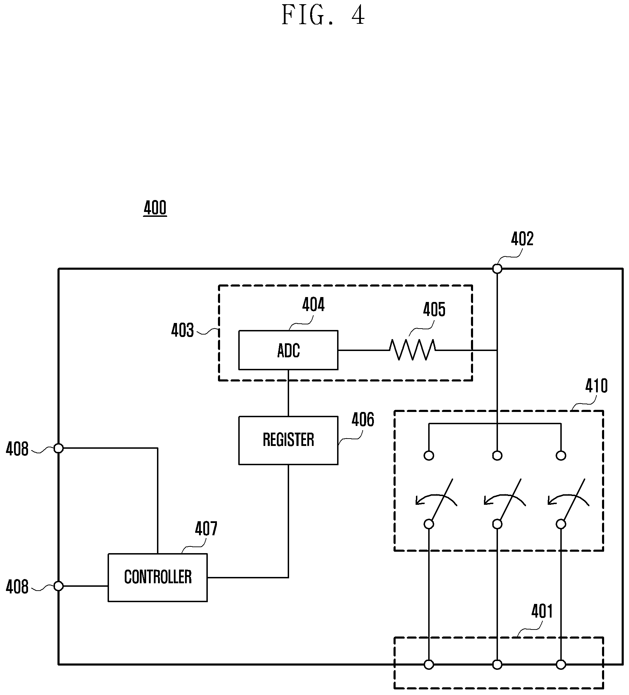

FIG. 4 is a diagram illustrating an antenna switching circuit in an electronic device according to an example.

Referring to FIG. 4, the antenna switching circuit 400 (e.g., the antenna switching circuit 330 in FIG. 3) may include at least one first port 401, a second port 402 electrically connected to an antenna (e.g., the antenna 321 in FIG. 3), at least one switch 410, a signal verification circuit 403 capable of verifying the characteristics of a signal input through the second port 402, a register 406, and/or a controller 407.

The first port 401 may be a port electrically connected to one matching circuit (e.g., a first matching circuit such as the first matching circuit 322-1 in FIG. 3, a second matching circuit such as the second matching circuit 322-2 in FIG. 3, or a third matching circuit such as the third matching circuit 322-3 in FIG. 3) among matching circuits (e.g., the matching circuits 322 in FIG. 3).

The at least one switch 410 may connect between the first port 401 corresponding to the matching circuit and the second port 402 under the control of the controller 407.

The controller 407 may control the connection of the at least one first port 401 and the second port 402. The controller 407 may receive power transmitted by a power management integrated circuit (e.g., the power management integrated circuit 315 in FIG. 3) through a third port 408, and the received power may be used for the operation of the controller 407.

The controller 407 may be electrically connected to a processor (e.g., the processor 311 in FIG. 3) through a fourth port 409, and may control the at least one switch 410 based on a control signal transmitted by the processor (e.g., the processor 311 in FIG. 3).

According to an example, the at least one switch 410 may be configured to connect the first port 401, electrically connected to the first matching circuit 322-1, and the second port 402, based on a control signal for connecting the first matching circuit 322-1 and the antenna 321. The first port 401 electrically connected to the second matching circuit 322-2 and the first port 401 electrically connected to the third matching circuit 322-3 may not be electrically connected to the antenna 321.

According to an example, the at least one switch 410 may be configured to connect the first port 401, electrically connected to the second matching circuit 322-2, and the second port 402, based on a control signal for connecting the second matching circuit 322-2 and the antenna 321. The first port 401 electrically connected to the first matching circuit 322-1 and the first port 401 electrically connected to the third matching circuit 322-3 may not be electrically connected to the antenna 321.

According to an example, the at least one switch 410 may be configured to connect the first port 401, electrically connected to the third matching circuit 322-3, and the second port 402, based on a control signal for connecting the third matching circuit 322-3 and the antenna 321. The first port 401 electrically connected to the first matching circuit 322-1 and the first port 401 electrically connected to the second matching circuit 322-2 may not be electrically connected to the antenna 321.

The antenna switching circuit 400 may include the signal verification circuit 403 for verifying whether a first printed circuit board (e.g., the first printed circuit board 310 in FIG. 3) and a second printed circuit board (e.g., the second printed circuit board 320 in FIG. 3) are electrically connected. Alternatively, the signal verification circuit 403 may be for verifying whether the first printed circuit board 310 and the antenna 321 are electrically connected.

The second port 402 is a port electrically connected to the antenna 321, and at least a part of signals output to the antenna 321 may be transferred to the antenna switching circuit 400 through the second port 402. According to an example, the processor 311 may transmit, to the antenna 321, a signal capable of verifying whether the first printed circuit board 310 and the second printed circuit board 320 are electrically connected.

According to an example, when the first printed circuit board 310 and the second printed circuit board 320 are electrically connected, the signal capable of verifying whether the first printed circuit board 310 and the second printed circuit board 320 are electrically connected may be transferred to the antenna switching circuit 400.

When the antenna switching circuit 400 receives the signal capable of verifying whether the first printed circuit board 310 and the second printed circuit board 320 are electrically connected, the received signal may be transferred to the signal verification circuit 403.

According to an example, when the first printed circuit board 310 and the second printed circuit board 320 are not electrically connected, the signal capable of verifying whether the first printed circuit board 310 and the second printed circuit board 320 are electrically connected may not be transferred to the antenna switching circuit 400.

When the antenna switching circuit 400 fails to receive the signal capable of verifying whether the first printed circuit board 310 and the second printed circuit board 320 are electrically connected, this signal may not be transferred to the signal verification circuit 403.

The signal verification circuit 403 may verify (or sense, measure) the characteristics of the signal input through the second port 402 (or the signal capable of verifying whether the first printed circuit board 310 and the second printed circuit board 320 are electrically connected).

The signal verification circuit 403 may include an element 405 (e.g., a passive element including at least one of a resistor, an inductor, and a capacitor, and/or an active element) having an impedance value of a specified magnitude or greater, and an analog-to-digital converter (ADC) 404 that converts a signal transmitted through the element 405 into a digital signal. The specified magnitude may be a magnitude for reducing (or minimizing) the power loss of the at least one switch 410. According to an example, the element 405 may be implemented to have a relatively high impedance value to reduce (or minimize) the power loss of the at least one switch 410. The ADC 404 may convert a signal transferred through the element 405 (which may be an analog signal) into a digital signal. The value of the converted digital signal may differ depending on the characteristics of the signal.

According to an example, the value of the converted digital signal may differ depending on the characteristics (or voltage) of the signal input through the second port 402 (or the signal capable of verifying whether the first printed circuit board 310 and the second printed circuit board 320 are electrically connected). If the voltage of the signal is equal to or greater than a specified value (e.g., 2V), the value of the converted digital signal may be 1. If the voltage of the signal is less than the specified value, the value of the converted digital signal may be 0. Conversely, if the voltage of the signal is equal to or greater than the specified value (e.g., 2V), the value of the converted digital signal may be 0. If the voltage of the signal is less than the specified value, the value of the converted digital signal may be 1.

As described above, the characteristics of the signal input through the second port 402 (or the signal capable of verifying whether the first printed circuit board 310 and the second printed circuit board 320 are electrically connected) may differ depending on whether the first printed circuit board 310 and the second printed circuit board 320 are electrically connected. Thus, the value of the converted digital signal may differ depending on whether the first printed circuit board 310 and the second printed circuit board 320 are electrically connected. For example, when the first printed circuit board 310 and the second printed circuit board 320 are electrically connected, the value of the converted digital signal may be 1, and when the first printed circuit board 310 and the second printed circuit board 320 are not electrically connected, the value of the converted digital signal may be 0.

The ADC 404 may transfer the value of the converted digital signal (or the characteristics of the signal) to the register 406. The register 406 may be a component capable of temporarily or non-temporarily storing the characteristics of the signal (or the value of the converted digital signal) transferred by the ADC 404. Although referred to as the register 406 in the disclosure, it may be replaced with various components (e.g., storage, memory) capable of storing specific data. The register 406 may store the characteristics of the signal transferred by the ADC 404 (or the signal verification circuit 403).

The controller 407 is electrically connected to the register 406 and may identify (or read) the data stored in the register 406. The controller 407 may identify the characteristics of the signal (or the value of the converted digital signal) stored in the register 406 and/or transmit the same to the processor 311.

According to an example, the controller 407 may receive a signal requesting the transmission of the data stored in the register 406 from the processor 311. The controller 407 may transmit the characteristics of the signal (or the value of the converted digital signal) stored in the register 406 to the processor 311 through the fourth port 409.

The processor 311 may identify the characteristics of the signal (or the value of the converted digital signal) and, based on the identification result, verify whether the first printed circuit board 310 and the second printed circuit board 320 (or the antenna 321) are electrically connected.

According to an example, when the value of the converted digital signal is 1, the processor 311 may determine (or verify) that the first printed circuit board 310 and the second printed circuit board 320 (or the antenna 321) are electrically connected. When the value of the converted digital signal is 0, the processor 411 may determine (or verify) that the first printed circuit board 310 and the second printed circuit board 320 (or the antenna 321) are not electrically connected.

The antenna switching circuit 400 described above can verify whether the first printed circuit board 310 and the second printed circuit board 320 (or the first printed circuit board 310 and the antenna 321) are electrically connected. Thus, the electronic device 101 may omit the circuit 314 illustrated in FIG. 3, thereby securing additional available mounting space on the first printed circuit board 310. Furthermore, since the antenna switching circuit 400 is connected through the MIPI port 317 of the processor 311, it may save the GPIO port 316 occupied by the circuit 314, and prevent a situation where other components to be electrically connected to the processor 311 cannot be connected through the GPIO port 316.

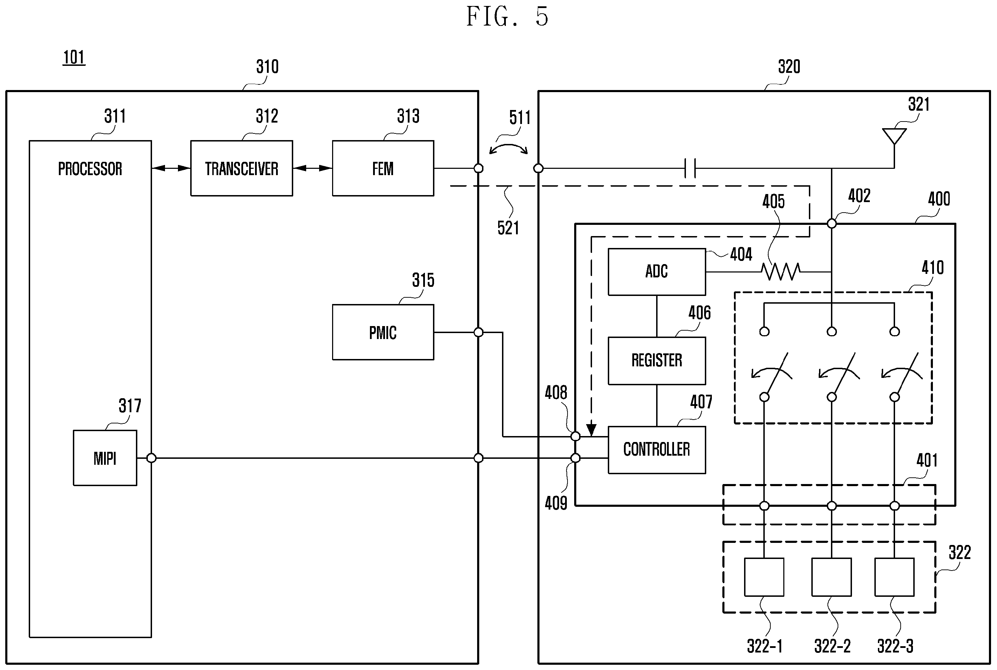

FIG. 5 is a diagram illustrating an example of verifying whether an antenna is coupled using an antenna switching circuit in an electronic device according to an example.

FIG. 5 illustrates an example in which an electronic device (e.g., the electronic device 101 in FIG. 1) verifies whether a first printed circuit board (e.g., the first printed circuit board 310 in FIG. 3) and a second printed circuit board (e.g., the second printed circuit board 320 in FIG. 3) are electrically connected, using the antenna switching circuit shown in FIG. 4 (e.g., the antenna switching circuit 400 in FIG. 4).

Referring to FIG. 5, the electronic device (e.g., the electronic device 101 in FIG. 1) may include the first printed circuit board 310 and/or the second printed circuit board 320.

The first printed circuit board 310 may be a printed circuit board on which various components of the electronic device 101 are disposed (or mounted, implemented). The first printed circuit board 310 may be referred to as a main board.

The first printed circuit board 310 may include a processor 311 (e.g., the processor 120 in FIG. 1 or the first communication processor 212 or the second communication processor 214 in FIG. 2), a transceiver 312 (e.g., the first RFIC 222, the second RFIC 224, or the fourth RFIC 228 in FIG. 2), and a front end module (FEM) 313 (e.g., the first RFFE 232 or the second RFFE 234 in FIG. 2). The term "include" may be replaced with "dispose" or "implement (or mount)".

The processor 311 may perform various operations for wireless communication on a cellular network. The processor 311 may support the establishment of a communication channel in a band to be used for wireless communication with the cellular network and support wireless communication through the established communication channel. Wireless communication on the cellular network may be referred to as cellular communication. The cellular communication may include at least one of 3^{rd} generation cellular communication, 4^{th} generation cellular communication, and/or 5^{th} generation cellular communication. The processor 311 may be referred to as a communication processor.

The transceiver 312 may perform various operations to process signals received from the processor 311. The transceiver 312 may perform a modulation operation on the signal received from the processor 311. For example, the transceiver 312 may perform a frequency modulation operation of converting a baseband signal received from the processor 311 into a frequency band (e.g., an RF band) to be used for cellular communication. Additionally, the transceiver 312 may perform a demodulation operation on a signal received from the outside. For example, the transceiver 312 may perform a frequency demodulation operation of converting a radio frequency (RF) signal into a baseband signal.

The FEM 313 may include components that process a signal (or a transmission signal, a Tx signal) transmitted by the transceiver 312 or a signal received from the outside. According to an example, the FEM 313 may include at least one of an amplifier for amplifying the signal transmitted by the transceiver, a low noise amplifier for amplifying the signal received from the outside, a filter for passing or removing a part of the frequency band of the signal, and a multiplexer (or duplexer) for separating the signal into a transmission signal or a reception signal.

The electronic device 101 may transmit a signal through the antenna 321 or receive an external signal through the antenna 321. The antenna 321 may be disposed (or implemented) on the second printed circuit board 320 which is electrically connected to the first printed circuit board 310.

The electronic device 101 may change a matching circuit electrically connected to the antenna 321 in order to transmit and/or receive signals of various frequency bands through the antenna 321. The electronic device 101 may include an antenna switching circuit 400 in order to change the connection of the matching circuit.

The antenna switching circuit 400 may include at least one first port 401, a second port 402 electrically connected to the antenna 321, at least one switch 410, a signal verification circuit 403 capable of verifying the characteristics of a signal input through the second port 402, a register 406, and/or a controller 407.

The first port 401 may be a port electrically connected to one matching circuit (e.g., a first matching circuit such as the first matching circuit 322-1 in FIG. 3, a second matching circuit such as the second matching circuit 322-2 in FIG. 3, or a third matching circuit such as the third matching circuit 322-3 in FIG. 3) among matching circuits (e.g., the matching circuits 322 in FIG. 3).

The at least one switch 410 may connect between the first port 401 corresponding to the matching circuit and the second port 402 under the control of the controller 407.

The controller 407 may control the connection of the at least one first port 401 and the second port 402. The controller 407 may receive power transmitted by a power management integrated circuit (e.g., the power management integrated circuit 315 in FIG. 3) through a third port 408, and the received power may be used for the operation of the controller 407.

The controller 407 may be electrically connected to a processor (e.g., the processor 311 in FIG. 3) through a fourth port 409, and may control the at least one switch 410 based on a control signal transmitted by the processor (e.g., the processor 311 in FIG. 3). The processor 311 may be electrically connected to the controller 407 through an MIPI port 317.

The antenna switching circuit 400 may include the signal verification circuit 403 for verifying whether a first printed circuit board (e.g., the first printed circuit board 310 in FIG. 3) and a second printed circuit board (e.g., the second printed circuit board 320 in FIG. 3) are electrically connected. Alternatively, the signal verification circuit 403 may be for verifying whether the first printed circuit board 310 and the antenna 321 are electrically connected.

The second port 402 is a port electrically connected to the antenna 321, and at least a part of signals output to the antenna 321 may be transferred to the antenna switching circuit 400 through the second port 402. According to an example, the processor 311 may transmit, to the antenna 321, a signal 521 capable of verifying whether the first printed circuit board 310 and the second printed circuit board 320 are electrically connected.

According to an example, when the first printed circuit board 310 and the second printed circuit board 320 are not electrically connected, the signal 521 capable of verifying whether the first printed circuit board 310 and the second printed circuit board 320 are electrically connected may not be transferred to the antenna switching circuit 400.

When the antenna switching circuit 400 fails to receive the signal 521 capable of verifying whether the first printed circuit board 310 and the second printed circuit board 320 are electrically connected, this signal 521 may not be transferred to the signal verification circuit 403.

According to an example, when the first printed circuit board 310 and the second printed circuit board 320 are electrically connected, the signal 521 capable of verifying whether the first printed circuit board 310 and the second printed circuit board 320 are electrically connected may be transferred to the antenna switching circuit 400.

When the antenna switching circuit 400 receives the signal 521 capable of verifying whether the first printed circuit board 310 and the second printed circuit board 320 are electrically connected, the received signal 521 may be transferred to the signal verification circuit 403.

Referring to FIG. 5, when the first printed circuit board 310 and the second printed circuit board 320 are electrically connected (511), the signal 521 capable of verifying whether the first printed circuit board 310 and the second printed circuit board 320 are electrically connected may be input to the antenna switching circuit 400 through the second port 402.

The signal verification circuit 403 may verify (or sense, measure) the characteristics of the signal 521 input through the second port 402 (or the signal capable of verifying whether the first printed circuit board 310 and the second printed circuit board 320 are electrically connected).

The signal verification circuit 403 may include an element 405 (e.g., a passive element including at least one of a resistor, an inductor, and a capacitor, and/or an active element) having an impedance value of a specified magnitude or greater, and an analog-to-digital converter (ADC) 404 that converts a signal transmitted through the element 405 into a digital signal. The specified magnitude may be a magnitude for reducing (or minimizing) the power loss of the at least one switch 410. According to an example, the element 405 may be implemented to have a relatively high impedance value to reduce (or minimize) the power loss of the at least one switch 410. The ADC 404 may convert a signal transferred through the element 405 (which may be an analog signal) into a digital signal. The value of the converted digital signal may differ depending on the characteristics of the signal.

According to an example, the value of the converted digital signal may differ depending on the characteristics (or voltage) of the signal 521 input through the second port 402 (or the signal capable of verifying whether the first printed circuit board 310 and the second printed circuit board 320 are electrically connected). If the voltage of the signal is equal to or greater than a specified value (e.g., 2V), the value of the converted digital signal may be 1. If the voltage of the signal is less than the specified value, the value of the converted digital signal may be 0. Conversely, if the voltage of the signal is equal to or greater than the specified value (e.g., 2V), the value of the converted digital signal may be 0. If the voltage of the signal is less than the specified value, the value of the converted digital signal may be 1.

As described above, the characteristics of the signal 521 input through the second port 402 (or the signal capable of verifying whether the first printed circuit board 310 and the second printed circuit board 320 are electrically connected) may differ depending on whether the first printed circuit board 310 and the second printed circuit board 320 are electrically connected. Thus, the value of the converted digital signal may differ depending on whether the first printed circuit board 310 and the second printed circuit board 320 are electrically connected. For example, when the first printed circuit board 310 and the second printed circuit board 320 are electrically connected, the value of the converted digital signal may be 1, and when the first printed circuit board 310 and the second printed circuit board 320 are not electrically connected, the value of the converted digital signal may be 0.

The ADC 404 may transfer the value of the converted digital signal (or the characteristics of the signal) to the register 406. The register 406 may be a component capable of temporarily or non-temporarily storing the characteristics of the signal (or the value of the converted digital signal) transferred by the ADC 404. Although referred to as the register 406 in the disclosure, it may be replaced with various components (e.g., storage, memory) capable of storing specific data. The register 406 may store the characteristics of the signal transferred by the ADC 404 (or the signal verification circuit 403).

The controller 407 is electrically connected to the register 406 and may identify (or read) the data stored in the register 406. The controller 407 may identify the characteristics of the signal (or the value of the converted digital signal) stored in the register 406 and/or transmit the same to the processor 311.

According to an example, the controller 407 may receive a signal requesting the transmission of the data stored in the register 406 from the processor 311. The controller 407 may transmit the characteristics of the signal (or the value of the converted digital signal) stored in the register 406 to the processor 311 through the fourth port 409.

The processor 311 may identify the characteristics of the signal (or the value of the converted digital signal) and, based on the identification result, verify whether the first printed circuit board 310 and the second printed circuit board 320 (or the antenna 321) are electrically connected.

According to an example, when the value of the converted digital signal is 1, the processor 311 may determine (or verify) that the first printed circuit board 310 and the second printed circuit board 320 (or the antenna 321) are electrically connected. When the value of the converted digital signal is 0, the processor 411 may determine (or verify) that the first printed circuit board 310 and the second printed circuit board 320 (or the antenna 321) are not electrically connected.

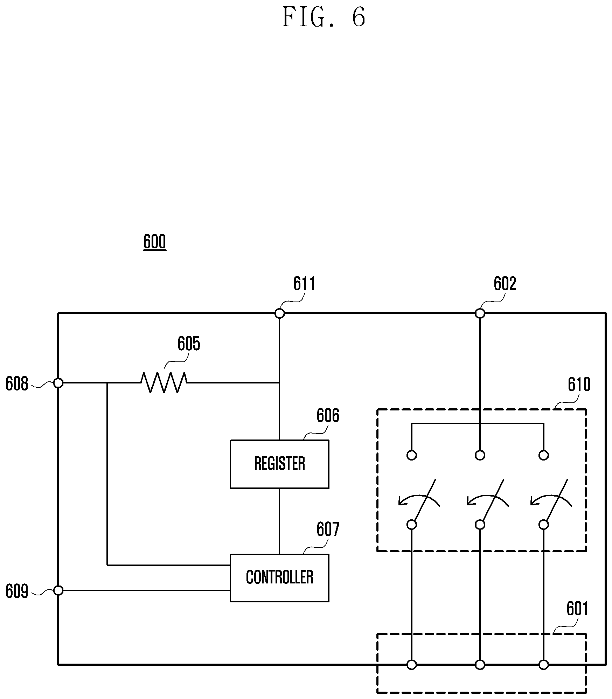

FIG. 6 is a diagram illustrating an antenna switching circuit in an electronic device according to an example.

Referring to FIG. 6, the antenna switching circuit 600 (e.g., the antenna switching circuit 330 in FIG. 3) may include at least one first port 601, a second port 602 electrically connected to an antenna (e.g., the antenna 321 in FIG. 3), a third port 611 electrically connected to the antenna 321, at least one switch 610, a signal verification circuit 605 capable of verifying the characteristics of a signal input through the third port 611, a register 606, and/or a controller 607.

The first port 601 may be a port electrically connected to one matching circuit (e.g., a first matching circuit such as the first matching circuit 322-1 in FIG. 3, a second matching circuit such as the second matching circuit 322-2 in FIG. 3, or a third matching circuit such as the third matching circuit 322-3 in FIG. 3) among matching circuits (e.g., the matching circuits 322 in FIG. 3).

The at least one switch 610 may connect between the first port 601 corresponding to the matching circuit and the second port 602 under the control of the controller 607.

The controller 607 may control the connection of the at least one first port 601 and the second port 602. The controller 607 may receive power transmitted by a power management integrated circuit (e.g., the power management integrated circuit 315 in FIG. 3) through a fourth port 608, and the received power may be used for the operation of the controller 607.

The controller 607 may be electrically connected to a processor (e.g., the processor 311 in FIG. 3) through a fifth port 609, and may control the at least one switch 610 based on a control signal transmitted by the processor (e.g., the processor 311 in FIG. 3).

According to an example, the at least one switch 610 may be configured to connect the first port 601, electrically connected to the first matching circuit 322-1, and the second port 602, based on a control signal for connecting the first matching circuit 322-1 and the antenna 321. The first port 601 electrically connected to the second matching circuit 322-2 and the first port 601 electrically connected to the third matching circuit 322-3 may not be electrically connected to the antenna 321.

According to an example, the at least one switch 610 may be configured to connect the first port 601, electrically connected to the second matching circuit 322-2, and the second port 602, based on a control signal for connecting the second matching circuit 322-2 and the antenna 321. The first port 601 electrically connected to the first matching circuit 322-1 and the first port 601 electrically connected to the third matching circuit 322-3 may not be electrically connected to the antenna 321.

According to an example, the at least one switch 610 may be configured to connect the first port 601, electrically connected to the third matching circuit 322-3, and the second port 602, based on a control signal for connecting the third matching circuit 322-3 and the antenna 321. The first port 601 electrically connected to the first matching circuit 322-1 and the first port 601 electrically connected to the second matching circuit 322-2 may not be electrically connected to the antenna 321.

The antenna switching circuit 600 may include the signal verification circuit 605 for verifying whether a first printed circuit board (e.g., the first printed circuit board 310 in FIG. 3) and a second printed circuit board (e.g., the second printed circuit board 320 in FIG. 3) are electrically connected. Alternatively, the signal verification circuit 605 may be for verifying whether the first printed circuit board 310 and the antenna 321 are electrically connected.

The third port 611 is a port electrically connected to the antenna 321 and may be a port from which a signal for verifying whether the first printed circuit board 310 and the second printed circuit board 320 are electrically connected is output. According to an example, the processor 311 may control the power management integrated circuit (PMIC) 315 to transmit, to the antenna switching circuit 600, the signal for verifying whether the first printed circuit board 310 and the second printed circuit board 320 are electrically connected. The power management integrated circuit 315 may transmit the signal for verifying whether the first printed circuit board 310 and the second printed circuit board 320 are electrically connected, to the antenna switching circuit 600 through the fourth port 608.

When the antenna switching circuit 600 receives the signal capable of verifying whether the first printed circuit board 310 and the second printed circuit board 320 are electrically connected, the received signal may be output to the third port 611 through the signal verification circuit 605.

The signal verification circuit 605 may verify (or sense, measure) the characteristics of the signal input through the fourth port 608 (or the signal capable of verifying whether the first printed circuit board 310 and the second printed circuit board 320 are electrically connected).

The register 606 is electrically connected to the signal verification circuit 605 and may be a component capable of temporarily or non-temporarily storing the characteristics of the signal. Although referred to as the register 606 in the disclosure, it may be replaced with various components (e.g., storage, memory) capable of storing specific data. The register 606 may store the characteristics of the signal transferred via the signal verification circuit 605.

According to an example, the characteristics (or voltage) of the signal measured using the signal verification circuit 605 may vary depending on whether the first printed circuit board 310 and the second printed circuit board 320 are electrically connected.

According to an example, when the first printed circuit board 310 and the second printed circuit board 320 are electrically connected, the signal capable of verifying whether the first printed circuit board 310 and the second printed circuit board 320 are electrically connected may be transmitted to the first printed circuit board 310 through the third port 611 and a line created between the first printed circuit board 310 and the second printed circuit board 320. In this case, the voltage (or characteristics) of the signal measured using the signal verification circuit 605 may be a voltage of a first magnitude.

According to an example, when the first printed circuit board 310 and the second printed circuit board 320 are not electrically connected, the third port 611 may be in an open state. Therefore, the impedance (or resistance) measurable through the third port 611 may be measured to be very high. The impedance (or resistance) of the first printed circuit board 310 may be measured to be very high. In this case, the voltage (or characteristic) of the signal measured using the signal verification circuit 605 may be a voltage of a second magnitude that is greater than the first magnitude.

The register 606 may store different values depending on whether the first printed circuit board 310 and the second printed circuit board 320 are electrically connected. According to an example, the register 606 may store a low (or 0) value when the first printed circuit board 310 and the second printed circuit board 320 are electrically connected. The register 606 may store a high (or 1) value when the first printed circuit board 310 and the second printed circuit board 320 are not electrically connected.

The controller 607 is electrically connected to the register 606 and may identify (or read) the data stored in the register 606. The controller 607 may identify the characteristics of the signal (or the value of the converted digital signal) stored in the register 606 and/or transmit the same to the processor 311.

According to an example, the controller 607 may receive a signal requesting the transmission of the data stored in the register 606 from the processor 311. The controller 607 may transmit the characteristics of the signal stored in the register 606 to the processor 311 through the fifth port 609.

The processor 311 may identify the characteristics of the signal and, based on the identification result, verify whether the first printed circuit board 310 and the second printed circuit board 320 (or the antenna 321) are electrically connected.

According to an example, when the characteristics of the signal transmitted by the controller 607 indicate a low (or 0) value, the processor 311 may determine (or verify) that the first printed circuit board 310 and the second printed circuit board 320 are electrically connected. When the characteristics of the signal transmitted by the controller 607 indicate a high (or 1) value, the processor 311 may determine (or verify) that the first printed circuit board 310 and the second printed circuit board 320 are not electrically connected.

The antenna switching circuit 600 described above can verify whether the first printed circuit board 310 and the second printed circuit board 320 (or the first printed circuit board 310 and the antenna 321) are electrically connected. Thus, the electronic device 101 may omit the circuit 314 illustrated in FIG. 3, thereby securing additional available mounting space on the first printed circuit board 310. Furthermore, since the antenna switching circuit 600 is connected through the MIPI port 317 of the processor 311, it may save the GPIO port 316 occupied by the circuit 314 and prevent a situation where other components to be electrically connected to the processor 311 cannot be connected through the GPIO port 316.

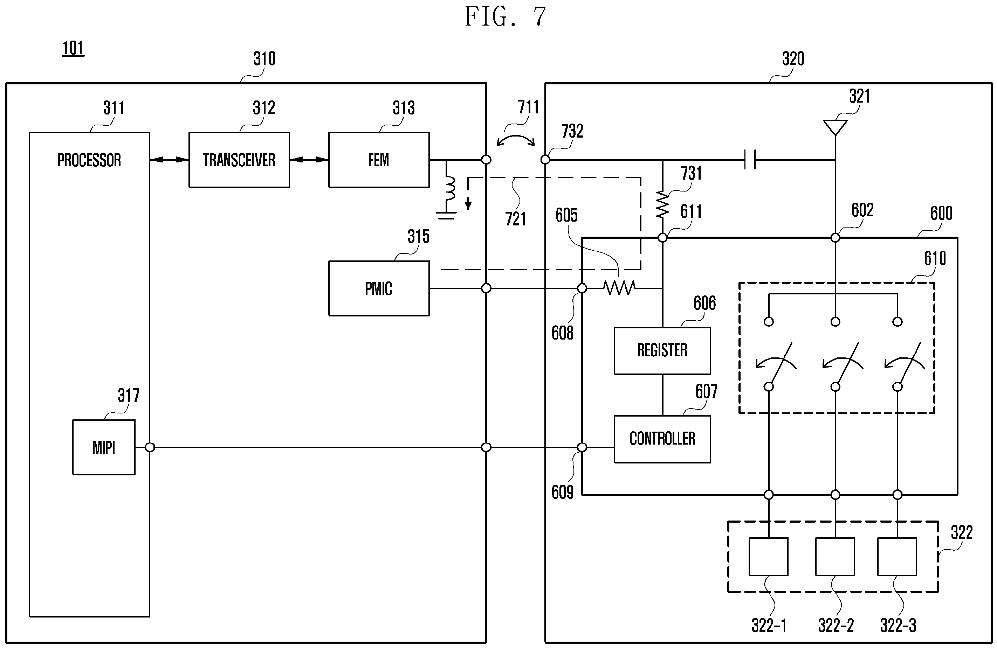

FIG. 7 is a diagram illustrating an example of verifying whether an antenna is coupled using an antenna switching circuit in an electronic device according to an example.

FIG. 7 illustrates an example in which an electronic device (e.g., the electronic device 101 in FIG. 1) verifies whether a first printed circuit board (e.g., the first printed circuit board 310 in FIG. 3) and a second printed circuit board (e.g., the second printed circuit board 320 in FIG. 3) are electrically connected, using the antenna switching circuit shown in FIG. 6 (e.g., the antenna switching circuit 600 in FIG. 6).

Referring to FIG. 7, the electronic device (e.g., the electronic device 101 in FIG. 1) may include the first printed circuit board 310 and/or the second printed circuit board 320.

The first printed circuit board 310 may be a printed circuit board on which various components of the electronic device 101 are disposed (or mounted, implemented). The first printed circuit board 310 may be referred to as a main board.

The first printed circuit board 310 may include a processor 311 (e.g., the processor 120 in FIG. 1 or the first communication processor 212 or the second communication processor 214 in FIG. 2), a transceiver 312 (e.g., the first RFIC 222, the second RFIC 224, or the fourth RFIC 228 in FIG. 2), and a front end module (FEM) 313 (e.g., the first RFFE 232 or the second RFFE 234 in FIG. 2). The term "include" may be replaced with "dispose" or "implement (or mount)".

The processor 311 may perform various operations for wireless communication on a cellular network. The processor 311 may support the establishment of a communication channel in a band to be used for wireless communication with the cellular network and support wireless communication through the established communication channel. Wireless communication on the cellular network may be referred to as cellular communication. The cellular communication may include at least one of 3^{rd} generation cellular communication, 4^{th} generation cellular communication, and/or 5^{th} generation cellular communication. The processor 311 may be referred to as a communication processor.

The transceiver 312 may perform various operations to process signals received from the processor 311. The transceiver 312 may perform a modulation operation on the signal received from the processor 311. For example, the transceiver 312 may perform a frequency modulation operation of converting a baseband signal received from the processor 311 into a frequency band (e.g., an RF band) to be used for cellular communication. Additionally, the transceiver 312 may perform a demodulation operation on a signal received from the outside. For example, the transceiver 312 may perform a frequency demodulation operation of converting a radio frequency (RF) signal into a baseband signal.

The FEM 313 may include components that process a signal (or a transmission signal, a Tx signal) transmitted by the transceiver 312 or a signal received from the outside. According to an example, the FEM 313 may include at least one of an amplifier for amplifying the signal transmitted by the transceiver, a low noise amplifier for amplifying the signal received from the outside, a filter for passing or removing a part of the frequency band of the signal, and a multiplexer (or duplexer) for separating the signal into a transmission signal or a reception signal.

The electronic device 101 may transmit a signal through the antenna 321 or receive an external signal through the antenna 321. The antenna 321 may be disposed (or implemented) on the second printed circuit board 320 which is electrically connected to the first printed circuit board 310.

The electronic device 101 may change a matching circuit electrically connected to the antenna 321 in order to transmit and/or receive signals of various frequency bands through the antenna 321. The electronic device 101 may include an antenna switching circuit 600 in order to change the connection of the matching circuit.

The antenna switching circuit 600 may include at least one first port 601, a second port 602 electrically connected to an antenna (e.g., the antenna 321 in FIG. 3), a third port 611 electrically connected to the antenna 321, at least one switch 610, at least one component 605 capable of verifying the characteristics of a signal input through the third port 611, a register 606, and/or a controller 607.

The first port 601 may be a port electrically connected to one matching circuit (e.g., a first matching circuit such as the first matching circuit 322-1 in FIG. 3, a second matching circuit such as the second matching circuit 322-2 in FIG. 3, or a third matching circuit such as the third matching circuit 322-3 in FIG. 3) among matching circuits (e.g., the matching circuits 322 in FIG. 3).

The at least one switch 610 may connect between the first port 601 corresponding to the matching circuit and the second port 602 under the control of the controller 607.

The controller 607 may control the connection of the at least one first port 601 and the second port 602. The controller 607 may receive power transmitted by a power management integrated circuit (e.g., the power management integrated circuit 315 in FIG. 3) through a fourth port 608, and the received power may be used for the operation of the controller 607.

The controller 607 may be electrically connected to a processor (e.g., the processor 311 in FIG. 3) through a fifth port 609, and may control the at least one switch 610 based on a control signal transmitted by the processor (e.g., the processor 311 in FIG. 3).

According to an example, the at least one switch 610 may be configured to connect the first port 601, electrically connected to the first matching circuit 322-1, and the second port 602, based on a control signal for connecting the first matching circuit 322-1 and the antenna 321. The first port 601 electrically connected to the second matching circuit 322-2 and the first port 601 electrically connected to the third matching circuit 322-3 may not be electrically connected to the antenna 321.

According to an example, the at least one switch 610 may be configured to connect the first port 601, electrically connected to the second matching circuit 322-2, and the second port 602, based on a control signal for connecting the second matching circuit 322-2 and the antenna 321. The first port 601 electrically connected to the first matching circuit 322-1 and the first port 601 electrically connected to the third matching circuit 322-3 may not be electrically connected to the antenna 321.

According to an example, the at least one switch 610 may be configured to connect the first port 601, electrically connected to the third matching circuit 322-3, and the second port 602, based on a control signal for connecting the third matching circuit 322-3 and the antenna 321. The first port 601 electrically connected to the first matching circuit 322-1 and the first port 601 electrically connected to the second matching circuit 322-2 may not be electrically connected to the antenna 321.

The antenna switching circuit 600 may include the signal verification circuit 605 for verifying whether a first printed circuit board (e.g., the first printed circuit board 310 in FIG. 3) and a second printed circuit board (e.g., the second printed circuit board 320 in FIG. 3) are electrically connected. Alternatively, the signal verification circuit 605 may be for verifying whether the first printed circuit board 310 and the antenna 321 are electrically connected.

The third port 611 is a port electrically connected to the antenna 321 and may be a port from which a signal 721 for verifying whether the first printed circuit board 310 and the second printed circuit board 320 are electrically connected is output. According to an example, the processor 311 may control the power management integrated circuit (PMIC) 315 to transmit, to the antenna switching circuit 600, the signal 721 for verifying whether the first printed circuit board 310 and the second printed circuit board 320 are electrically connected. The power management integrated circuit 315 may transmit the signal 721 for verifying whether the first printed circuit board 310 and the second printed circuit board 320 are electrically connected, to the antenna switching circuit 600 through the fourth port 608.

When the antenna switching circuit 600 receives the signal 721 capable of verifying whether the first printed circuit board 310 and the second printed circuit board 320 are electrically connected, the received signal 721 may be output to the third port 611 through the signal verification circuit 605.

The signal verification circuit 605 may verify (or sense, measure) the characteristics of the signal input through the fourth port 608 (or the signal capable of verifying whether the first printed circuit board 310 and the second printed circuit board 320 are electrically connected).

The register 606 is electrically connected to the signal verification circuit 605 and may be a component capable of temporarily or non-temporarily storing the characteristics of the signal. Although referred to as the register 606 in the disclosure, it may be replaced with various components (e.g., storage, memory) capable of storing specific data. The register 606 may store the characteristics of the signal transferred via the signal verification circuit 605.

According to an example, the characteristics (or voltage) of the signal measured using the signal verification circuit 605 may vary depending on whether the first printed circuit board 310 and the second printed circuit board 320 are electrically connected.

According to an example, when the first printed circuit board 310 and the second printed circuit board 320 are electrically connected, the signal 721 capable of verifying whether the first printed circuit board 310 and the second printed circuit board 320 are electrically connected may be transmitted to the first printed circuit board 310 through the third port 611 and a line 711 created between the first printed circuit board 310 and the second printed circuit board 320. In this case, the voltage (or characteristics) of the signal measured using the signal verification circuit 605 may be a voltage of a first magnitude. According to an example, the voltage of the signal measured using the signal verification circuit 605 may be determined based on a ratio of the impedance (or resistance) of the signal verification circuit 605 to the impedance (or resistance) of the component 731 connected through the third port 611.

According to an example, when the first printed circuit board 310 and the second printed circuit board 320 are not electrically connected, a port 732 to be connected to the first printed circuit board 310 may be in an open state. Thus, when measuring the impedance through the third port 611, the impedance may be measured to be very high. In this case, the voltage (or characteristics) of the signal measured using the signal verification circuit 605 may be a voltage of a second magnitude greater than the first magnitude.

The register 606 may store different values depending on whether the first printed circuit board 310 and the second printed circuit board 320 are electrically connected. According to an example, the register 606 may store a low (or 0) value when the first printed circuit board 310 and the second printed circuit board 320 are electrically connected. The register 606 may store a high (or 1) value when the first printed circuit board 310 and the second printed circuit board 320 are not electrically connected.

The controller 607 is electrically connected to the register 606 and may identify (or read) the data stored in the register 606. The controller 607 may identify the characteristics of the signal (or the value of the converted digital signal) stored in the register 606 and/or transmit the same to the processor 311.

According to an example, the controller 607 may receive a signal requesting the transmission of the data stored in the register 606 from the processor 311. The controller 607 may transmit the characteristics of the signal stored in the register 606 to the processor 311 through the fifth port 609.

The processor 311 may identify the characteristics of the signal and, based on the identification result, verify whether the first printed circuit board 310 and the second printed circuit board 320 (or the antenna 321) are electrically connected.

According to an example, when the characteristics of the signal transmitted by the controller 607 indicate a low (or 0) value, the processor 311 may determine (or verify) that the first printed circuit board 310 and the second printed circuit board 320 are electrically connected. When the characteristics of the signal transmitted by the controller 607 indicate a high (or 1) value, the processor 311 may determine (or verify) that the first printed circuit board 310 and the second printed circuit board 320 are not electrically connected.

An antenna switching circuit 400 according to an example may include at least one first port 401 electrically connected to a matching circuit 322. The antenna switching circuit 400 may include a second port 402 electrically connected to one port among the at least one first port 401 and an antenna 321. The antenna switching circuit 400 may include a signal verification circuit 403 configured to verify characteristics of a signal input through the second port 402. The antenna switching circuit 400 may include a register 406 configured to store data corresponding to the characteristics of the signal input through the second port 402. The antenna switching circuit 400 may include a controller 407 configured to control a connection between the at least one first port 401 and the second port 402. The controller 407 may be configured to transmit the data stored in the register 406 to a processor 311.

In the antenna switching circuit 400 according to an example, the characteristics of the signal input through the second port 402 may vary depending on whether a printed circuit board including the processor 311 and the antenna 321 are electrically connected.

In the antenna switching circuit 400 according to an example, the signal input through the second port 402 may be a signal for verifying whether the printed circuit board and the antenna 321 are electrically connected.

In the antenna switching circuit 400 according to an example, the controller 407 may receive a request for transmission of the data stored in the register 406 from the processor 311. The controller 407 may be configured to transmit the data stored in the register 406 to the processor 311.

In the antenna switching circuit 400 according to an example, the controller 407 may be connected to the processor 311 through a mobile industry processor interface (MIPI) port of the processor 311.

In the antenna switching circuit 400 according to an example, the signal verification circuit 403 may include an element 405 having an impedance of a specified magnitude or greater. The signal verification circuit 403 may include an analog-to-digital converter (ADC) 404 configured to convert a signal applied through the element 405 into a digital signal.

An electronic device 101 according to an example may include a first printed circuit board 310 including a processor 311, a transceiver, and a front-end module. The electronic device 101 may include a second printed circuit board 320 including an antenna 321 and an antenna switching circuit 400. The antenna switching circuit 400 may include at least one first port 401 electrically connected to a matching circuit 322. The antenna switching circuit 400 may include a second port 402 electrically connected to one port among the at least one first port 401 and an antenna 321. The antenna switching circuit 400 may include a signal verification circuit 403 configured to verify characteristics of a signal input through the second port 402. The antenna switching circuit 400 may include a register 406 configured to store data corresponding to the characteristics of the signal input through the second port 402. The antenna switching circuit 400 may include a controller 407 configured to control a connection between the at least one first port 401 and the second port 402. The processor 311 may transmit a signal requesting the data stored in the register 406 to the controller 407. The processor 311 may receive the data stored in the register 406 from the controller 407. The processor 311 may be configured to verify, based on the data stored in the register 406, whether the first printed circuit board 310 and the second printed circuit board 320 are electrically connected.

In the electronic device 101 according to an example, the characteristics of the signal input through the second port 402 may vary depending on whether the first printed circuit board 310 and the second printed circuit board 320 are electrically connected.

In the electronic device 101 according to an example, the signal input through the second port 402 may be a signal for verifying whether the first printed circuit board 310 and the second printed circuit board 320 are electrically connected.

In the electronic device 101 according to an example, the controller 407 may be connected to the processor 311 through a mobile industry processor interface (MIPI) port of the processor 311.

In the electronic device 101 according to an example, the signal verification circuit 403 may include an element 405 having an impedance of a specified magnitude or greater. The signal verification circuit 403 may include an analog-to-digital converter (ADC) 404 configured to convert a signal applied through the element 405 into a digital signal.

An antenna switching circuit 400 according to an example may include at least one first port 601 electrically connected to a matching circuit 322. The antenna switching circuit 400 may include a second port 602 electrically connected to one port among the at least one first port 601 and an antenna 321. The antenna switching circuit 400 may include a third port 611 configured to output a signal applied to the antenna switching circuit 600. The antenna switching circuit 400 may include a signal verification circuit 605 configured to verify characteristics of the signal output through the third port 611. The antenna switching circuit 400 may include a register 606 configured to store data corresponding to the characteristics of the signal output through the third port 611. The antenna switching circuit 400 may include a controller 607 configured to control a connection between the at least one first port 601 and the second port 602. The controller 607 may be configured to transmit the data stored in the register 606 to a processor 311.

In the antenna switching circuit 400 according to an example, the characteristics of the signal output through the third port 611 may vary depending on whether a printed circuit board 310 including the processor 311 and the antenna 321 are electrically connected.

In the antenna switching circuit 400 according to an example, the signal output through the third port 611 may be a signal for verifying whether the printed circuit board 310 and the antenna 321 are electrically connected.

In the antenna switching circuit 400 according to an example, the controller 607 may receive transmission of the data stored in the register 606 from the processor 311. The controller 607 may be configured to transmit the data stored in the register 606 to the processor 311.

In the antenna switching circuit 400 according to an example, the controller 607 may be connected to the processor 311 through a mobile industry processor interface (MIPI) port of the processor 311.

In the antenna switching circuit 400 according to an example, the signal verification circuit 605 may include an element having an impedance of a specified magnitude or greater.

An electronic device 101 according to an example may include a first printed circuit board 310 including a processor 311, a transceiver 312, and a front-end module 313. The electronic device 101 may include a second printed circuit board 320 including an antenna 321 and an antenna switching circuit 600. The antenna switching circuit 600 may include at least one first port 601 electrically connected to a matching circuit 322. The antenna switching circuit 600 may include a second port 602 electrically connected to one port among the at least one first port 601 and the antenna 321. The antenna switching circuit 600 may include a third port 611 configured to output a signal applied to the antenna switching circuit 600. The antenna switching circuit 600 may include a signal verification circuit 605 configured to verify characteristics of the signal output through the third port 611. The antenna switching circuit 600 may include a register 606 configured to store data corresponding to the characteristics of the signal output through the third port 611. The antenna switching circuit 600 may include a controller 607 configured to control a connection between the at least one first port 601 and the second port 602. The processor 311 may transmit a signal requesting the data stored in the register 606 to the controller 607. The processor 311 may receive the data stored in the register 606 from the controller 607. The processor 311 may be configured to verify, based on the data stored in the register 606, whether the first printed circuit board 310 and the second printed circuit board 320 are electrically connected.

In the electronic device 101 according to an example, the characteristics of the signal output through the third port 611 may vary depending on whether a printed circuit board 310 including the processor 311 and the antenna 321 are electrically connected.

In the electronic device 101 according to an example, the signal output through the third port 611 may be a signal for verifying whether the printed circuit board 310 and the antenna 321 are electrically connected.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B", "at least one of A and B", "at least one of A or B", "A, B, or C", "at least one of A, B, and C", and "at least one of A, B, or C" may include any one of, or all possible combinations of the items enumerated together in a corresponding one of the phrases. As used herein, such terms as "1^{st}" and "2^{nd}", or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with", "coupled to", "connected with", or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic", "logic block", "part", or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An antenna switching circuit (400) comprising:
at least one first port (401) electrically connected to a matching circuit (322);
a second port (402) electrically connected to one port among the at least one first port (401) and an antenna (321);
a signal verification circuit (403) configured to verify characteristics of a signal input through the second port (402);
a register (406) configured to store data corresponding to the characteristics of the signal input through the second port (402); and
a controller (407) configured to control a connection between the at least one first port (401) and the second port (402),
wherein the controller (407) is configured to transmit the data stored in the register (406) to a processor (311).

2. The antenna switching circuit (400) of claim 1, wherein the characteristics of the signal input through the second port (402) vary depending on whether a printed circuit board including the processor (311) and the antenna (321) are electrically connected.

3. The antenna switching circuit (400) of claim 1 or 2, wherein the signal input through the second port (402) is a signal for verifying whether the printed circuit board and the antenna (321) are electrically connected.

4. The antenna switching circuit (400) of any one of claims 1 to 3, wherein the controller (407) is configured to:
receive a request for transmission of the data stored in the register (406) from the processor (311), and
transmit the data stored in the register (406) to the processor (311).

5. The antenna switching circuit (400) of any one of claims 1 to 4, wherein the controller (407) is connected to the processor (311) through a mobile industry processor interface (MIPI) port of the processor (311).

6. The antenna switching circuit (400) of any one of claims 1 to 5, wherein the signal verification circuit (403) comprises:
an element (405) having an impedance of a specified magnitude or greater; and
an analog-to-digital converter (ADC) (404) configured to convert a signal applied through the element (405) into a digital signal.

7. An electronic device comprising:
a first printed circuit board (310) including a processor (311), a transceiver, and a front-end module; and
a second printed circuit board (320) including an antenna (321) and an antenna switching circuit (400),
wherein the antenna switching circuit (400) comprises:
at least one first port (401) electrically connected to a matching circuit (322);
a second port (402) electrically connected to one port among the at least one first port (401) and an antenna (321);
a signal verification circuit (403) configured to verify characteristics of a signal input through the second port (402);
a register (406) configured to store data corresponding to the characteristics of the signal input through the second port (402); and
a controller (407) configured to control a connection between the at least one first port (401) and the second port (402), and
wherein the processor (311) is configured to:
transmit a signal requesting the data stored in the register (406) to the controller (407),
receive the data stored in the register (406) from the controller (407), and
verify, based on the data stored in the register (406), whether the first printed circuit board (310) and the second printed circuit board (320) are electrically connected.

8. The electronic device of claim 7, wherein the characteristics of the signal input through the second port (402) vary depending on whether the first printed circuit board (310) and the second printed circuit board (320) are electrically connected.

9. The electronic device of claim 7 or 8, wherein the signal input through the second port (402) is a signal for verifying whether the first printed circuit board (310) and the second printed circuit board (320) are electrically connected.

10. The electronic device of any one of claims 7 to 9, wherein the controller (407) is connected to the processor (311) through a mobile industry processor interface (MIPI) port of the processor (311).

11. The electronic device of any one of claims 7 to 10, wherein the signal verification circuit (403) comprises:
an element (405) having an impedance of a specified magnitude or greater; and
an analog-to-digital converter (ADC) (404) configured to convert a signal applied through the element (405) into a digital signal.

12. An electronic device comprising:
a first printed circuit board (310) including a processor (311), a transceiver (312), and a front-end module (313); and
a second printed circuit board (320) including an antenna (321) and an antenna switching circuit (600),
wherein the antenna switching circuit (600) comprises:
at least one first port (601) electrically connected to a matching circuit (322);
a second port (602) electrically connected to one port among the at least one first port (601) and the antenna (321);
a third port (611) configured to output a signal applied to the antenna switching circuit (600);
a signal verification circuit (605) configured to verify characteristics of the signal output through the third port (611);
a register (606) configured to store data corresponding to the characteristics of the signal output through the third port (611); and
a controller (607) configured to control a connection between the at least one first port (601) and the second port (602), and
wherein the processor (311) is configured to:
transmit a signal requesting the data stored in the register (606) to the controller (607),
receive the data stored in the register (606) from the controller (607), and
verify, based on the data stored in the register (606), whether the first printed circuit board (310) and the second printed circuit board (320) are electrically connected.

13. The electronic device of claim 12, wherein the characteristics of the signal output through the third port (611) vary depending on whether a printed circuit board (310) including the processor (311) and the antenna (321) are electrically connected.

14. The electronic device of claim 12 or 13, wherein the signal output through the third port (611) is a signal for verifying whether the printed circuit board (310) and the antenna (321) are electrically connected.
